# EUROPÄISCHE PATENTSCHRIFT

(11) **EP 0 931 880 B1**
(45) Veröffentlichungstag und Bekanntmachung des Hinweises auf die Patenterteilung: **11.07.2007**
(21) Anmeldenummer: 99100670.1
(22) Anmeldetag: 15.01.1999
(51) Int. Cl.: E03B 1/00

(54) **Verfahren zur Ermittlung einer regionalen Gebietsentwässerung**
Method of calculating the drainage from an area
Méthode pour calculer le drainage d'une région

(30) Priorität: 20.01.1998 DE 19801749
(43) Veröffentlichungstag der Anmeldung: 28.07.1999
(73) Patentinhaber: Forschungszentrum Jülich GmbH, 52425 Jülich (DE)
(72) Erfinder: Wendland, Frank Dr., 50935 Köln (DE); Kunkel, Ralf Dr., 52428 Jülich (DE)
(74) Vertreter: Gille Hrabal Struck Neidlein Prop Roos

(56) Entgegenhaltungen:
- Gefunden im Internet: URL:http://www.usbr.gov/pmts/hydraulics_la b/pubs/PAP/PAP-0708.pdf> [gefunden am 2006-09]
- DE COENE/EVERS: "Hydrological survey of the Mananga Basin" StartDateMarker 1981, EndDateMarker * Seite 168, Absatz 6.4.1 - Seite 170 *
- DR. T. BRIKOWSKI: "Idealized Rainfall Runoff Lecture Notes" 2002,
- UNKNOWN: "Hydrograph"

## Beschreibung

Die Erfindung betrifft ein Verfahren zur Ermittlung von Verweilzeiten von Grundwasser und der Schadstoffbelastung der Hauptvorfluters innerhalb eines Einzugsgebiets.

Ein Verfahren zur Ermittlung von Verweilzeiten von Wasser im Untergrund ist aus der Druckschrift "R. Kunkel, F. Wendland; WEKU - a GIS-Supported stochastic model of groundwater residence times in upper aquifers for the supraregional groundwater management; Environmental Geology 30 (1/2), Seite 1-9, March 1997, Springer-Verlag" bekannt.

Ein Einzugsgebiet wird bestimmt. Ein Einzugsgebiet weist einen Hauptvorfluter sowie regelmäßig eine Mehrzahl an Nebenvorflutern auf.

Unter Einzugsgebiet ist ein in der Horizontalprojektion gemessenes Gebiet zu verstehen, aus dem Wasser einem bestimmten Ort zufließt. Ein Einzugsgebiet wird durch Wasserscheiden begrenzt und in km² angegeben.

Ein Vorfluter ist ein der Vorflut dienendes Gewässer. Unter Vorflut ist die Möglichkeit des Wassers zu verstehen, mit natürlichem Gefälle oder durch künstliche Hebung abzufließen. Unter Gewässer ist in der Natur fließendes oder stehendes Wasser einschließlich Gewässerbett und Grundwasserleiter zu verstehen. Ein Grundwasserleiter ist ein Gesteinskörper, der geeignet ist, Grundwasser weiterzuleiten. Unter Nebenvorflutern werden die Gewässer verstanden, die innerhalb des Einzugsgebietes des Hauptvorfluters dem Hauptvorfluter zuströmen oder mit diesem in Verbindung stehen.

Das Wasser eines Einzugsgebietes fließt folglich entweder direkt in den Hauptvorfluter oder aber zunächst in einen Nebenvorfluter und vom Nebenvorfluter in den Hauptvorfluter. Über den Hauptvorfluter fließt das Wasser aus dem Einzugsgebiet ab.

Der Hauptvorfluter ist regelmäßig ein Fluß, der aus dem Einzugsgebiet herausfließt. Nebenvorfluter können Drainagen oder Flüsse sein, die in den Hauptvorfluter einmünden.

Ein Grundwassergleichenplan ist eine Karte, die den Grundwasserspiegel bzw. -pegel in einem Gebiet wiedergibt. Ein hydraulischer Gradient ist ein Pegelunterschied zwischen zwei verschiedenen Grundwasserpegeln. Der Durchlässigkeitsbeiwert des durchströmten Gesteins sowie Volumen der Hohlraumanteile im Gestein, die vom Grundwasser durchströmt werden, werden hydrogeologische Kennwerte genannt.

Grundwasser fließt in der gleichen Region in unterschiedlich tiefen Schichten. Die oberste Schicht, in der das Grundwasser fließt, wird oberer Grundwasserleiter genannt.

Die Zeit, die versickerndes Niederschlagswasser im Untergrund verbleibt, bevor es in einen Vorfluter einströmt, wird Verweilzeit genannt.

Aus Grundwassergleichenplänen des oberen Grundwasserleiters oder der Topographie verknüpft mit dem Grundwasserflurabstand werden hydraulische Gradienten der betrachteten Region ortsabhängig erfaßt und hieraus die Fließrichtung von Wasser im Gestein ermittelt. Es werden die natürlichen und künstlichen Entwässerungssysteme (Flüsse, Seen, Meere, Drainagen, Entwässerungsgräben) zum Beispiel mit Hilfe geeigneter Karten in der betrachteten Region ermittelt und so festgestellt, welche Entwässerungssysteme in einer Region vorherrschen. Ermittelt werden die hydrogeologischen Kennwerte des oberen Grundwasserleiters.

Aus den vorgenannten Informationen werden die maximale und minimale Verweilzeit von Grundwasser im oberen Grundwasserleiter berechnet. Das Grundwasser, welches in einen Nebenvorfluter wie eine Drainage abfließt, muß regelmäßig nur kurze Wege bis zum Entwässerungssystem zurücklegen und verweilt daher nur kurz im Einzugsgebiet. Hieraus ergibt sich eine minimale Verweilzeit. Das Grundwasser, welches von eventuell vorhandenen Drainagen nicht aufgenommen wird und in den Hauptvorfluter abfließt, muß regelmäßig vergleichsweise lange Wege bis zum Entwässerungssystem zurücklegen. Dieses Grundwasser verweilt entsprechend lange im Einzugsgebiet. Hieraus ergibt sich eine maximale Verweilzeit von Grundwasser im Einzugsgebiet.

Grundwasser ist regelmäßig zum Beispiel mit Nitrat belastet. Verweilt Grundwasser lange Zeit im Einzugsgebiet, so kann vergleichsweise viel des im Grundwasser befindlichen Nitrates auf natürlichem Weg abgebaut werden. Entsprechend gering ist die Nitratbelastung des aus dem Einzugsgebiet abfließenden Wassers. Umgekehrt verhält es sich, wenn das Grundwasser nur kurz im Einzugsgebiet verweilt.

Es ist von Interesse, die Verweilzeiten von Grundwasser im Einzugsgebiet oder in einer Flächeneinheit des Einzugsgebiets zu kennen. Es kann dann zum Beispiel abgeschätzt werden, wie stark die Nitratbelastung der abfließenden Gewässer sein wird. In Einzugsgebieten, in denen die Verweilzeiten überwiegend kurz sind, wird die Nitratbelastung für die abfließenden Gewässer groß sein. In diesen Einzugsgebieten sind dann verstärkt geeignete Gegenmaßnahmen zu treffen.

Das bekannte Verfahren weist den Nachteil auf, daß nur minimale und maximale Verweilzeiten ermittelt werden können. Weitergehende Aussagen über Verweilzeiten sind nicht möglich.

Aufgabe der Erfindung ist die Schaffung eines Verfahrens, welches eine weitere Aussage über Verweilzeiten ermöglicht.

Die Aufgabe der Erfindung wird durch ein Verfahren gelöst, das die Merkmale des Hauptanspruchs aufweist. Vorteilhafte Ausgestaltungen ergeben sich aus den abhängigen Ansprüchen.

Anspruchsgemäß werden zunächst ein Maß für einen Gesamtabfluß M_{MQ} und ein Maß für einen Grundwasserabfluß M_{NNQ} ermittelt.

Unter Abfluß wird sich unter dem Einfuß der Schwerkraft auf oder unter der Landoberfläche sich bewegendes Wasser verstanden. Quantitativ handelt es sich hierbei um ein Wasservolumen aus einem Einzugsgebiet, das den Abflußquerschnitt in der Zeiteinheit durchfließt.

Unter Grundwasserabfluß ist die Grundwasserabflußsumme pro Zeiteinheit zu verstehen, die in m³/sec angegeben wird. Die Differenz zwischen Gesamtabfluß und Grundwasserabfluß ist näherungsweise gleich dem Direktabfluß. Unter Direktabfluß wird die Summe aus Oberflächenabfluß und Zwischenabfluß verstanden.

Der Grundwasserabfluß entspricht der unterirdisch langsam abfließenden Abflußkomponente aus einem Einzugsgebiet. Der Direktabfluß entspricht der schnell abfließenden Abflußkomponente aus einem Einzugsgebiet.

Es wird der Quotient M_{MQ}/M_{MNQ} (Maß für Gesamtabfluß/ Maß für Grundwasserabfluß) gebildet. Das Ergebnis läßt einen Rückschluß auf maximale und minimale Verweilzeiten im Einzugsgebiet zu: Ist der Quotient M_{MQ}/M_{MNQ} größer als 2, so dominiert die minimale Verweilzeit. Ist der Quotient M_{MQ}/M_{MNQ} kleiner als 2, so dominiert die maximale Verweilzeit.

Ein Maß für den Grundwasserabfluß ist der Niedrigwasserabfluß, der in m³/sec angegeben wird. Es handelt sich dabei um den unteren Grenzwert der Abflüsse. Unter unterem Grenzwert wird bei Abflüssen das kleinste Tagesmittel verstanden, wenn die Tagesmittel die Tageswerte bilden. Unter Tageswert ist ein für den Tag repräsentativer Wert zu verstehen.

Ein Maß für den Gesamtabfluß ist der mittlere Abfluß. Unter mittlerer Abfluß ist der arithmetische Mittelwert der Abflüsse zu verstehen.

Soll die dominante Verweilzeit für ein gesamtes Einzugsgebiet ermittelt werden, so wird in einer Ausgestaltung des Verfahrens der Niedrigwasserabfluß und der mittlere Abfluß des Hauptvorfluters als jeweiliges Maß vorgesehen. Die Ermittlung derartiger Maße erfolgt in der Regel an hydrometrischen Meßstationen.

Wird das Einzugsgebiet gedanklich in Flächenelemente unterteilt und soll die dominante Verweilzeit für eines der Flächenelemente ermittelt werden, so wird in einer Ausgestaltung des Verfahrens der Niedrigwasserabfluß und der mittlere Abfluß des Flächenelementes ermittelt. Dies erfolgt in der Regel durch Verteilung der M_{MQ} und M_{MNQ} - Werte des gesamten Einzugsgebietes auf die Flächenelemente, zum Beispiel durch die Einbeziehung klimatischer, bodenkundlicher oder zusätzlicher Standortfaktoren.

In einer weiteren Ausgestaltung des Verfahrens wird das Verhältnis von langsamen unterirdischen Abflußkomponenten Aₗ und schnellen unterirdischen Abflußkomponenten Aₛ gemäß der Gleichung Aₛ/Aₗ= (M_{MQ}/M_{MNQ})-1 ermittelt. Eine Maßeinheit für die Abflußkomponente ist mm/Jahr.

Das Grundwasser, das maximal verweilt, fließt langsam ab (langsame Abflußkomponente). Das Grundwasser, das minimal verweilt, fließt schnell ab (schnelle Abflußkomponente).

Der ermittelte Niedrigwasserabfluß und der mittlere Abfluß bezieht sich regelmäßig auf ein Jahr. Andere Zeitauflösungen sind jedoch möglich.

Gemäß der Erfindung werden zusätzlich ortsabhängig die maximale und minimale Verweilzeit von Grundwasser bestimmt. Die ermittelten Verweilzeiten können pro Flächenelement innerhalb des Einzugsgebietes bestimmt worden sein. Anhand dieser quantitativen Angabe und der Angabe, welche Verweilzeit dominiert, wird abgeschätzt, welche Hauptvorfluter im besonderen Maß mit Schadstoffen wie Stickstoff belastet sind. Quantitative Aussagen zur Schadstoffbelastung sind insbesondere dann möglich, wenn zusätzlich die Abbauraten der Schadstoffe im Einzugsgebiet bestimmt worden sind. Es kann dann abgeschätzt werden, wie lange Grundwasser im Einzugsgebiet verbleibt und welcher Anteil der Schadstoffe, die in das Grundwasser gelangt sind, in dieser Zeit abgebaut werden.

## Patentansprüche

1. Verfahren zu Ermittlung dominante Verweilzeiten von Grundwasser und der Schadstoffbelastung des Hauptvorfluters innerhalb eines Einzugsgebiet mit den Schritten:
- Bestimmung eines Maßes für einen Gesamtabfluss M_{MQ} und einen Grundwasserabfluss M_{MNQ}, wobei die Ermittlung der beiden Maße an hydrometrischen Meßstationen erfolgt,
- Bildung eines Quotienten M_{MQ}/M_{MNQ},
- ist M_{MQ}/M_{MNQ} größer als zwei, so dominiert die minimale Verweilzeit,
- ist M_{MQ}/M_{MNQ} kleiner als zwei, dominiert die maximale Verweilzeit
- wobei zusätzlich eine minimale und eine maximale VerWeilzeit quantitativ ermittelt wird und bei dem unter Einbeziehung dieser Informationen über Verweilzeiten die Schadstoffbelastung des Hauptvorfluters des Einzugsgebiets abgeschätzt wird.

2. Verfahren nach Anspruch 1, bei dem der Niedrigwasserabfluß des Hauptvorfluters als Maß für den Grundwasserabfluß M_{MNQ} und der mittlere Abfluß des Hauptvorfluters als Maß für den Gesamtabfluß M_{MQ} eingesetzt wird.

3. Verfahren nach Anspruch 1, bei dem der Niedrigwasserabfluß einer Teilfläche des Einzugsgebietes als Maß für den Grundwasserabfluß M_{MNQ} und der mittlere Abfluß dieser Teilfläche des Einzugsgebietes als Maß für den Gesamtabfluß M_{MQ} eingesetzt wird.

## Claims

1. Method for establishing dominant residence times of ground-water and the pollution burden of the main receiving water within a drainage area comprising the steps of:
- determination of a measure for an overall discharge M_{MQ} and a ground-water discharge M_{MNQ}, wherein the establishment of the two measures takes place at hydrometric measurement units,
- forming a quotient M_{MQ}/M_{MNQ},
- if M_{MQ}/M_{MNQ} is greater than 2, then the minimal residence time dominates,
- if M_{MQ}/M_{MNQ} is less than 2, then the maximal residence time dominates,
- wherein, additionally, a minimal and a maximal residence time is established quantatively and wherein the pollution burden of the main receiving water of the drainage area is estimated, taking into account this information about residence times.

2. Method according to claim 1, wherein the low-water discharge of the main receiving water is used as a measure for the ground-water discharge M_{MNQ} and the mean discharge of the main receiving water is used as measure for the overall discharge M_{MQ}.

3. Method according to claim 1, wherein the low-water discharge of a partial area of the drainage area is used as a measure for the ground-water discharge M_{MNQ} and the mean discharge of this partial area of the discharge area is used as a measure for the overall discharge M_{MQ}.

## Revendications

1. Procédé de détermination des temps de séjour dominants des eaux souterraines et de la charge polluante du cours d'eau récepteur principal d'une région comprenant les étapes de :
- déterminer un moyen de mesure d'un écoulement total M_{MQ} et d'un écoulement des eaux souterraines M_{MNQ}, la détermination des deux moyens de mesure étant réalisée aux stations de mesure hydrométrique,
- former un quotient M_{MQ}/M_{MNQ},
- si M_{MQ}/M_{MNQ} est supérieur à deux, le temps de séjour minimal domine,
- si M_{MQ}/M_{MNQ} est inférieur à deux, le temps de séjour maximal domine,
- un temps de séjour minimal et un temps de séjour maximal étant supplémentairement déterminés de manière quantitative et la charge polluante du cours d'eau récepteur principal de la région étant évaluée en tenant compte de ces informations des temps de séjour.

2. Procédé selon la revendication 1, dans lequel l'écoulement des basses eaux du cours d'eau récepteur principal est utilisé comme moyen de mesure de l'écoulement des eaux souterraines M_{MNQ} et l'écoulement moyen du cours d'eau récepteur principal est utilisé comme moyen de mesure de l'écoulement total M_{MQ}.

3. Procédé selon la revendication 1, dans lequel l'écoulement des basses eaux d'une surface partielle de la région est utilisé comme moyen de mesure de l'écoulement des eaux souterraines M_{MNQ} et l'écoulement moyen de la dite surface partielle de la région est utilisé comme moyen de mesure de l'écoulement total M_{MQ}.
